(19) Europäisches Patentamt
European Patent Office
Office européen des brevets

(11) **EP 2 437 041 A1**

(12) **EUROPEAN PATENT APPLICATION**

(43) Date of publication:
**04.04.2012 Bulletin 2012/14**

(21) Application number: **10011339.8**

(22) Date of filing: **29.09.2010**

(51) Int Cl.:
**G01M 7/08** (2006.01)      **G01N 3/307** (2006.01)
**G01N 3/32** (2006.01)

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(71) Applicant: **Peelen, Harry**
**1422 CG Ulthoorn (NL)**

(72) Inventor: **Minkhorst, J.H.K.**
**NL- 6151 EZ  Munstergeleen (NL)**

(74) Representative: **Renkema, Jaap**
**IPecunia Patents B.V.**
**P.O. Box 593**
**6160 AN Geleen (NL)**

(54) **Stepper torsion bench, method for characterizing polymeric materials and a method for performing mechanical calculations in the field of industrial designing**

(57)      The present invention relates to a stepper-torsion-bench comprising a motor having a first axis, a torsion tester having a second axis, a first clamp having a third axis and a second clamp having a fourth axis; the clamps being arranged for holding a test sample; wherein the first clamp is operatively connected to the motor and the second clamp is operatively connected to the torsion tester; and wherein the motor, the first clamp, the torsion tester and the second clamp are aligned such that the first, the second, the third and the fourth axes coincide, characterized in that the motor is a stepper motor.

The invention further relates to a method for material characterization and a method for mechanical construction calculations in industrial design, both methods using a stepper torsion-bench,

EP 2 437 041 A1

**Description**

The present Invention relates to a torsion bench, which comprises a motor having a first axis, a torsion tester having a second axis, a first clamp having a third axis and a second clamp having a fourth axis. The clamps are arranged for holding a test sample. The first clamp is operatively connected to the motor and the second clamp is operatively connected to the torsion tester. The motor, the first clamp, the torsion tester and the second clamp are aligned such that the first, the second, the third and the fourth axes substantially coincide.

A torsion bench (also termed torque bench) is known in the art of mechanical testing of materials as a test method to determine stress-strain relationships of materials under torsion.

It is a disadvantage of such known torsion benches, that they are not suitable for determining time dependent material behavior (visco-elastic / visco-plastic properties).

Another disadvantage of the torsion benches of the prior art is that stresses cannot be accurately determined at large strains.

It is therefore an object of the present invention to obviate or at least mitigate at least part of the above stated disadvantages by providing an improved torsion bench which is capable of being used In characterizing the visco-elastic/visco-plastic properties of materials, in particular polymeric materials.


SUMMARY OF THE INVENTION

This object is achieved by providing a torsion bench, characterized in that the motor is a stepper motor. The torsion bench according to the present invention is therefore also termed a stepper torsion bench.

Thus, the present invention relates to a stepper-torsion-bench, which comprises a motor having a first axis, a torsion tester having a second axis, a first clamp having a third axis and a second clamp having a fourth axis; the clamps being arranged for holding a test sample; wherein the first clamp Is operatively connected to the motor and the second clamp is operatively connected to the torsion tester; and wherein the motor, the first clamp, the torsion tester and the second clamp are aligned such that the first, the second, the third and the fourth axes coincide, characterized in that the motor is a stepper motor.

A stepper motor is characterized in that one rotation of the rotor may be performed in a fixed number of discrete steps, for example 200 steps. This can be realized by providing a large number of electro magnets In the stator or by multiple toothed electromagnets arranged around a central gear-shaped piece of iron. To make the motor shaft run, a first electromagnet is given power, which aligns the gear's teeth to the first electromagnet due to magnetic attraction between the first electromagnet and the gear's teeth. The position of the gear's teeth with reference to a second electromagnets is slightly offset. So, when the second electromagnet is turned on and the first electromagnet is turned off, the gear rotates slightly to align with the second electromagnet. This process may be repeated from the second to a third electromagnet and so on. Each of those slight rotations is called a "step", with an integer number of steps making a full rotation. In this way, the motor may be turned by a precise angle. The motor's position may be controlled precisely without any feedback mechanism. This arrangement also provides the excellent capability of the stepper motor to hold the rotor in a fixed position, without slipping. A test sample may therefore be kept at a constant and fixed strain for a long time. The motors used In torsion benches known in the prior art are not capable of holding a sample at a fixed strain, especially at large strains, because the stator of the electromotor is not capable of keeping the rotor in a fixed position. Slipping of the rotor inside the stator may therefore erroneously influence the result of the measurement. Step size repeatability is an important feature of a stepper motor and a fundamental reason for their use In positioning applications, such as the application In the torsion bench according to the present invention. Nowadays, stepper motors may be rated such that the travel of every full step (e.g. 1.8° per full step of 200 steps per revolution (360°)) may be within 10%, preferably within 7%, more preferably within 5%, even more preferably within 3% of the travel of each full step.

The present invention also relates to a method for material characterization using the stepper torsion bench. The method comprises the steps of:

- providing a test sample;
- clamping the test sample into the clamps connected to the stepper motor and to the torsion tester;
- deforming the material by torsion;
- measuring the couple


In an embodiment the test sample may be deformed dynamically to determine the complex visco-elastic modulus. Preferably this method is performed at low strain, preferably at a strain between 1 and 50%, more preferably between 5 and 25%, more preferably between 10 and 15%.

In an embodiment the test sample may be deformed statically with a monotonous increasing torsion towards high strains up to at least 100%, preferably up to at least 150%, more preferably up to at least 200%, more preferably up to at least 300%. Contrary to a standard tensile test this method using the stepper torsion bench according to the present Invention, strains up to and beyond 100% as stated above can be reached without any problem.

This method may be used to determine the maximum allowable stress and strain of a material. In a preferred embodiment, the test sample may be deformed statically at a constant deformation rate (i.e. torsion gradient) and at a constant temperature. The maximum allowable stress and strain at said deformation rate (i.e. torsion gradient) may be determined. This procedure may be repeated for other deformation rate and temperature combinations.

The present invention further relates to a method for mechanical construction calculations in industrial design, the method comprising the steps of:

- determining conditions which a mechanical construction has to be able to withstand, the conditions comprising temperature (T) and deformation time;
- determining a reference time of a material from a reference line diagram which is characteristic for the material;
- determining the maximum allowable strain and stress at the reference time from the isochrone material characteristics;
- designing the intended construction by using non modulus mechanics.

The deformation time equals the total amount of applied strain, divided by the deformation gradient. The deformation gradient in turn represents the amount of strain applied in a certain amount of time;

The reference lines are material specific parameter-lines, Each reference line is built up of points representing deformation time-temperature couples having identical stress at identical strain.

The reference time $t_R$ can be determined by taking the intersection with the x-axis (i.e. at T=0˚C) of the reference line on which the temperature — deformation time couple which the construction must be able to withstand lies.

Isochrones are stress-strain curves measured with the Stepper-Torsion-Bench according to the present invention wherein the test sample may be statically deformed increasing torsion towards high strains up to 100%. The maximum allowable strain corresponds to the 85% strain proportionality boundary as determined by the British Plastic and Rubber Institute.

DETAILED DESCRIPTION

The invention will now be described In more detail with reference to the following Figures:

FIG. 1 Schematic representation of a Stepper-Torsion-Bench according to the present invention

FIG. 2 Schematic representation of the determination scheme of reference lines

FIG. 3 Determined bundle of reference lines for a polymer

FIG. 4 Measured bundle of isochrones for a polymer.

FIG. 5 Photograph of a beer crate designed according to the method of the present invention.

FIG. 6 Top view of the structural elements used for designing a beer crate shown In FIG. 5

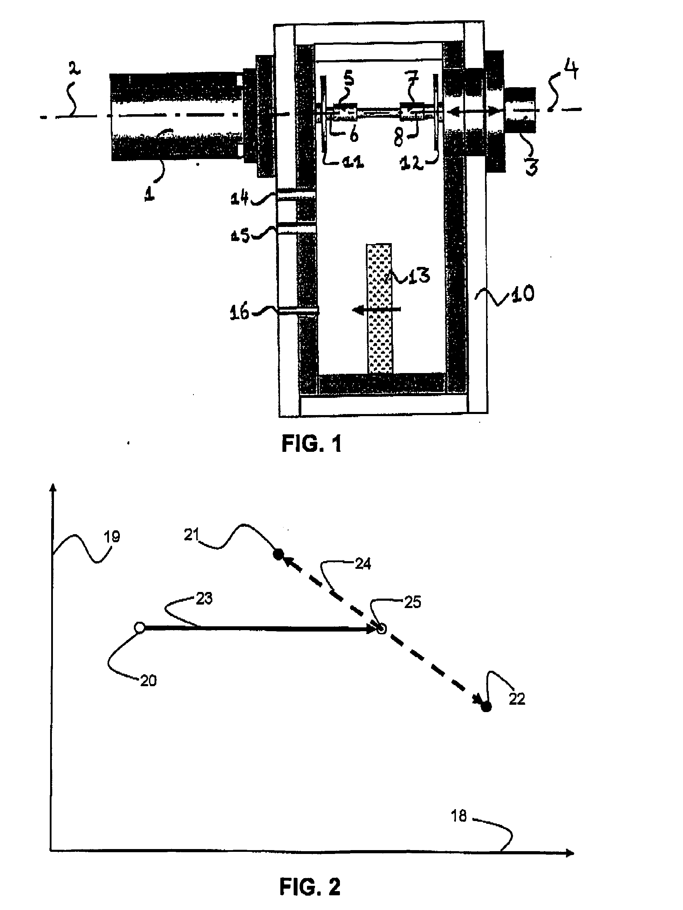

FIG.1 Shows a schematic representation of a Stepper-Torsion-Bench according to the present invention. The Stepper-Torsion-Bench comprises a stepper motor 1 having a first axis 2, a torsion tester 3 having a second axis 4, a first clamp 5 having a third axis 6 and a second clamp 7 having a fourth axis 8. The stepper motor preferably has a step angle of between 1˚ and 5˚, a positional accuracy (i.e. maximum displacement fault) of less than 10%, preferably less than 7%, more preferably less than 5% and even more preferably less than 3% and a torque between 0.5 Nm and 50 Nm, preferably between 5 Nm and 20 Nm. Such stepper motor are readily available, for examples at www.stappenmotor.nl at Putten, the Netherlands. An example of a suitable stepper motor is the 34SM155-058-8W-SB-12 stepper motor of the above mentioned firm. Other suppliers of suitable stepper motors are Mijnsbergen b.v., Mijdrecht. The Netherlands and Morskate, Enschede, The Netherlands.

The clamps, which in the present example are dremel clamps, for example multi chucks no. 4486 suitable for clamping objects with a radial dimension between 0.8 and 3.2 mm, for the present application a radial dimension of 3.0 mm is preferred and available at Dremel®, are arranged for holding a test sample 9. The first clamp 6 is operatively connected to the motor 1 and the second clamp 7 is operatively connected to the torsion tester 3. The motor 1, the first clamp 5, the torsion tester 3 and the second clamp 7 are aligned such that the first axis 2, the second axis 4, the third axis 6 and the fourth axis 8 substantially coincide. The torsion tester 3 may be a digital torsion tester or the torsion tester 3 may comprise a digital balance and a lever (not shown in FIG. 1).

in this particular example, the Stepper-Torsion-Bench comprises a temperature controlled chamber 10, two temperature equalizers 11 and 12 for clamps 5 and 7 respectively and a fan 13, In particular a computer fan. The temperature equalizers may be discs of a heat conducting material, in particular metals, for example copper, having a diameter of between 3 cm and 20 cm, preferably between 5 cm and 17 cm, more preferably between 7 cm and 15 cm and a thickness of between 1 mm and 7 mm, preferably between 1.2 mm and 5 mm, more preferably between 1.5 mm and 3 mm.

The fan 13 may be a computer fan. Computer fans usually are 12 V fans and usually have a square frame and available In frame sizes of 60 mm, 80 m, 92 mm and 120 mm. The amount of airflow which fans generate is typically measured In cubic feet per minute (CFM), and the speed of rotation is measured In revolutions per minute (RPM). Fans suitable for the present application may have an adjustable RPM rating, to enable to control of the required airflow. Fan speeds may be controlled manually (i.e. potentiometer control), thermally, or by computer hardware or software.

The temperature controlled chamber 10 may comprise a heater 14, cooler 15 and a temperature sensor 16

**Reference lines**

The bundle of reference lines of a specific construction material may be determined using the stepper torsion bench according to the present invention.

FIG. 2 Schematically shows how anchor points for the bundle of reference lines are determined. The horizontal axis 18 of FIG. 2 represents the temperature. The vertical axis 19 of FIG. 2 represents the tension.

In a first reference experiment, a test specimen, is tested at a first temperature ($T_1$) and first rotation time ($t_1$): for example log(t) = 4, which means a single rotation of the motor of the stepper-torsion-bench takes $10^4$ seconds (2.8 hours). The tension after one rotation of the stepper motor is determined ($\sigma_1$). The point ($T_1,\sigma_1$) is indicated with reference number 20 in FIG. 2.

In a second reference experiment, a test specimen of the same material, is tested at a second temperature ($T_2$), preferably above the first temperature and a second rotation time ($t_2$), preferably below the first rotation time; for example log(t) = 2, which means a single rotation of the motor of the torsion stepper bench takes $10^2$ seconds (1.7 min). The tension after one rotation of the stepper motor is determined ($\sigma_2$). The point ($T_2,\sigma_2$) Is indicated with reference number 21 in FIG. 2.

In a third reference experiment, a test specimen of the same material, is tested at a third temperature ($T_3$) preferably above the second temperature, at the same rotation time than the second reference experiment ($t_3=t_2$). The tension after one rotation of the stepper motor is determined ($\sigma_3$). The point ($T_3,\sigma_3$) is indicated with reference number 22 in FIG. 2.

A diagram of the measured tension after 1 rotation (y-axis) against the temperature (x-axis) at which the reference experiments have been carried out is constructed as shown in FIG. 2. The diagram comprises the points ($T_1$, $\sigma_1$), ($T_2$, $\sigma_2$) and ($T_3$, $\sigma_3$), indicated with reference numbers 20, 21 and 23 respectively.

($T_1$, $\sigma_1$) 20 is a first anchor point for the reference lines. A second anchor point is determined by determining the intersecting coordinates of a straight horizontal line trough ($T_1$, $\sigma_1$) parallel to the x-axis 23 (i.e. at constant σ) and a straight line connecting ($T_2$, $\sigma_2$) and ($T_3$, $\sigma_3$) 24. The coordinates of the above described intersection are: ($T_{23}$, $\sigma_{23}$) which is a second anchor point 25 for the reference lines, because the first and the second anchor point are determined at different temperatures ($T_1$ and $T_{23}$, respectively) and at different rotation times ($t_1$ and $t_2$, respectively), and both have the same strain (i.e. one rotation) and the same stress ($\sigma_1=\sigma_{23}$).

The above stated procedure may be repeated to determine a third anchor point.

The reference lines are calculated with the regression formula of Williams, Landle and Ferry (see Equation 1), further referred to as the WLF-function.

$$T = \cfrac{1}{\cfrac{1}{T_0} - \cfrac{\log(a_T)}{T_{Q/R}}} - T_0 \qquad \text{Equation 1}$$

Wherein:

- T is the temperature in degrees Celcius;
- $T_0$ is -$T_g$ and $T_g$ is the glass transition temperature of the polymer material;

- $a_T = t/t_R$, wherein t is the deformation time at temperature T and $t_R$ is the deformation time at T = 0 ˚C having the same strain and stress than at the temperature T at deformation time t (i.e. $t_R$ is the intercept of the reference line with the x-axis);
- $T_{Q/R}$ is the activation temperature defined as the activation energy Q [$J*mol^{-1}$] divided by the gas constant R, R = 8.31 $J*mol^{-1}*K^{-1}$;

The horizontal asymptote of the reference lines (where $\log(a_r) \to \infty$) is T = $T_0$ = $-T_g$.
The vertical asymptote of the reference lines (where T $\to \infty$) crosses $\log(a_r)=\log(t/t_R) = T_{Q/R}/T_0=-T_{Q/R}/T_g$: the vertical asymptote therefore is $\log(t) = -\log(t_R)*T_{Q/R}/T_g$.

The activation temperature is defined by a physical reaction equation, giving a temperature -time relation, which is accurate above the glass transition temperature ($T_g$), preferably at least 30˚C above the $T_g$. Equation 2 shows such relation.

$$\frac{t}{t_R} = e^{\frac{Q}{R \cdot T}} = e^{\frac{T_{Q/R}}{T}} \qquad \qquad \text{Equation 2}$$

Wherein:

- t is the deformation time at temperature T;
- $t_R$ is the deformation time at T = 0 ˚C having the same strain and stress than at the temperature T at deformation time t;
- Q is the activation energy [$J*mol^{-1}$];
- R is the gas constant, R = 8.31 $J*mol^{-1}*K^{-1}$;
- T is the temperature in degrees Celsius, ˚C,

The WLF-function represents T as a function of the deformation time (t). The WLF-function has three unknown parameters: To, $T_{Q/R}$ and $t_R$. Having determined two anchor points In the above described way, one of the three parameters has to be known to be able to construct the reference line representing a deformation of one rotation of the stepper torsion bench. Usually the glass transition temperature of the tested material is a known parameter. Then the other two parameters (i.e. $T_{Q/R}$ and $t_R$) can be determined by fitting the WLF-function through the two anchor points.

If three anchor points have been determined, all three unknown parameters can be determined by fitting the WLF-function through the three anchor points.

The fitting can be done by regression techniques, for example by the method of least-squares.

Other reference lines may now be constructed by lines which are parallel to the reference line through the anchor points. This can for example be done by choosing a range of deformation times at 0˚C (e.g. $\log(t_R)$ = 0, 1, 2, 3, etc) and constructing lines through those points parallel to the reference line through the anchor points.

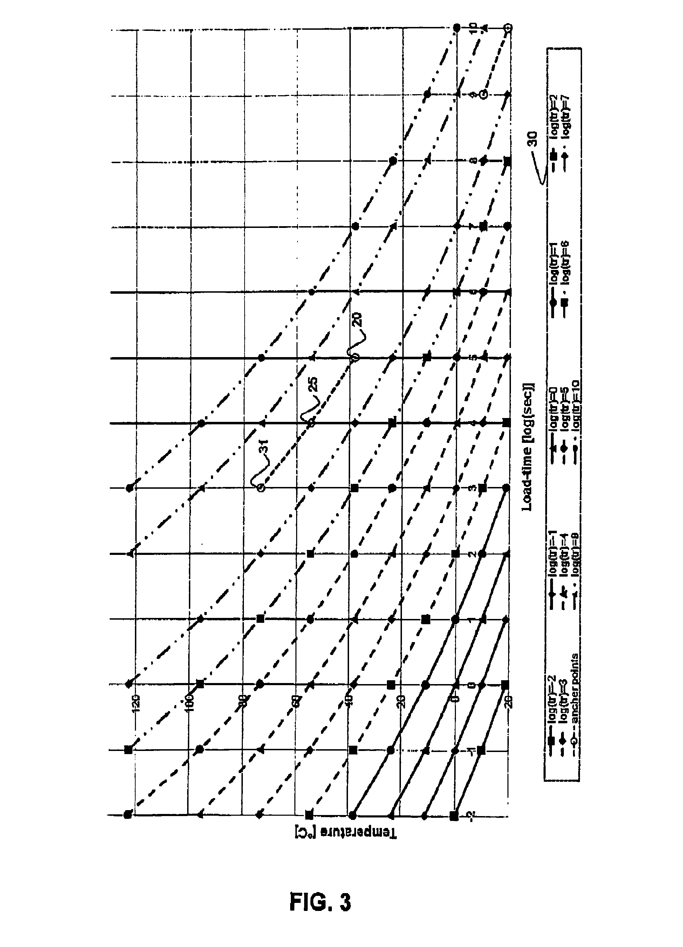

A bundle of reference lines for a polymer is shown In FIG. 3. The legend of FIG. 3, 30, indicates which value of $\log(t_R)$ corresponds to which reference line. The anchor points as shown In FIG. 2 (20 and 25) and a third anchor point 31, determined according to the procedure stated above are also shown in FIG. 3.

The bundle of reference lines is used in the method according to the present invention in the following way:

- determine for a certain application what temperature (T) and deformation time (t) a mechanical construction must be able to withstand;
- find the reference line through (t,T) in a first diagram showing a bundle of reference lines, determined with the above described procedure;
- determine the intersection of that reference line with the x-axis (i.e. $\log(t_R)$);
- this parameter ($\log(t_R)$) is a design parameter

**isochrones**

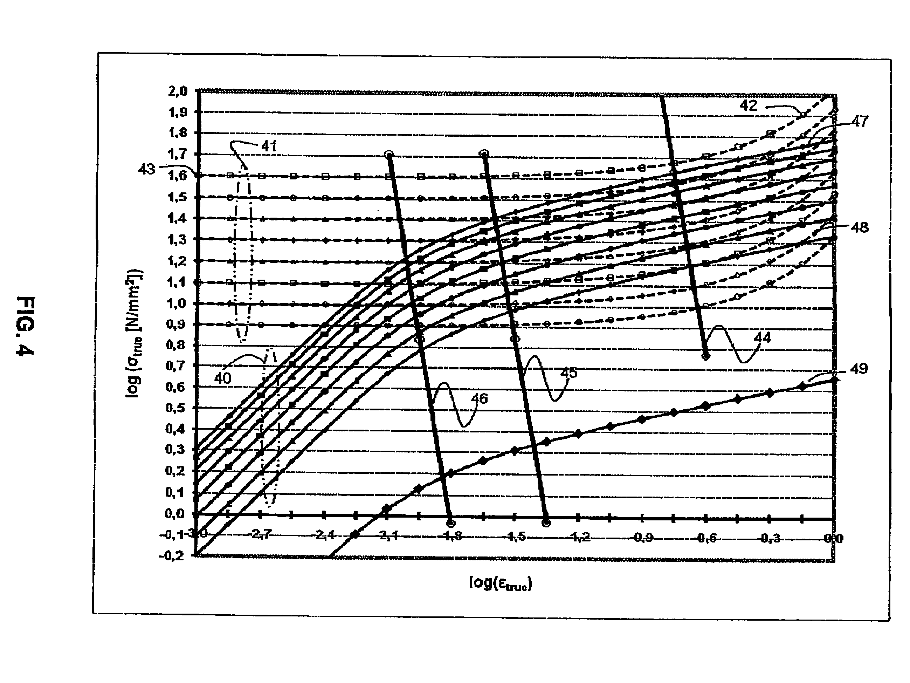

In a second diagram, as shown in FIG. 4, a bundle of stress-strain curves at constant $\log(t_R)$ is shown 40. In FIG. 4, the horizontal axis (x-axis) shows the strain on a logarithmic scale ($\log(\varepsilon)$). The vertical axis (y-axis) shows the true stress on a logarithmic scale ($\log(\sigma_{true})$). The isochrones with number 47 and 48 correspond to $\log(t_R)$ = 1.5 and 5 respectively. The isochrones between number 47 and 48 relate to equidistant $\log(t_R)$ values. The isochrones indicated with number 49 corresponds to log($t_R$) =10.

In a standard tensile test the (polymeric) maternal starts yielding at the yield-strain ($\varepsilon_{yield}$).

The yield stress ($\sigma_{yield}$) is the maximum stress in the stress-strain curve. For deformations beyond the yield-strain, neck formation occurs in the test specimen, which means that locally the cross-sectional area of the test specimen decreases. The nominal (or engineering) stress (i.e. tensile force divided by the initial cross sectional area of the test specimen) therefore decreases at deformations beyond the yield strain. The true stress can be calculated by correcting the nominal stress with the change of the cross sectional area of the test specimen. The true stress may be calculated from the engineering (nominal) stress with the following equations:

$$\sigma_{true} = \left(1 + \varepsilon_e\right)\cdot\sigma_e \qquad \text{Equation 3}$$

Wherein:

$\sigma_{true}$ is the true stress [MPa = N/mm$^2$];

$\varepsilon_e$ is the engineering (or nominal) strain [%];

$\sigma_e$ is the engineering (or nominal) stress [MPa = N/mm$^2$];

$$\varepsilon_{true} = \ln\left(1 + \varepsilon_e\right) \qquad \text{Equation 4}$$

Wherein:

$\varepsilon_{true}$ is the true strain [%];

$\varepsilon_e$ is the engineering (or nominal) strain [%];

Substituting equation 4 into equation 3 leads to:

$$\sigma_e = \frac{\sigma_{true}}{\exp\left(\varepsilon_{true}\right)} \qquad \text{Equation 5}$$

With equation 5 the tensile stress curve may be simulated with the measurement data of a torsion test. Beyond the yield strain, neck formation occurs. Beyond the yield point, only the neck part continues to be deformed (strained), only the yield strain can be measured with a standard tensile test. The reliability of the test results at a strain beyond the yield strain deteriorates.

With a torsion test, preferably performed according to the present invention, the stress-strain curve is a monotonously increasing curve. The determined tension in the torsion test represents the true stress in the test specimen and the strain represents the true strain in the test specimen.

At a constant torsion gradient (i.e. angular deformation (rotation) per amount of time), torsion measurements provide more accurate and reliable results then a standard tensile test, even (and especially) above the yield strain. Above the yield strain, the standard tensile test does not produce satisfactory results anymore and is therefore not suitable for the purpose of the present invention.

The stress-strain curves are measured at a constant temperature, preferably room temperature and with a constant torsion gradient. The torsion gradient can be used to calculate the deformation time for one complete rotation (i.e. angular deformation of 360˚), being t for the anchor points. The stress-strain curves are therefore recorded at a point on a reference line (t, T) and the recorded stress-strain curve is representative for all (t, T) pairs on that reference line. The isochrones are indicated with the reference time ($t_R$) corresponding to the deformation time at T = 0 °C as described before.

Surprisingly it was discovered that the isochrones (stress-strain curves) may be described by the equation of Ramberg, Osgood and Norton, from this point on termed as the RON-equation. The RON-equation is given in equation 6. It was experimentally shown that the RON-equation is suitable to obtain a good approximation for the stress-strain curves, making up the bundle of isochrones.

$$\varepsilon = \frac{\varepsilon_{e.l.}}{2} \cdot \left( \frac{\sigma}{\sigma_{e.l.}} + \left( \frac{\sigma}{\sigma_{e.l.}} \right)^N \right) \qquad \text{Equation 6}$$

Wherein:

E is the applied strain in the torsion test [%]:
$\varepsilon_{e.l.}$ is the elastic strain limit, i.e. the 50% proportionality limit (linear strain / total strain = 0.5);
$\sigma$ is the measured stress in the torsion test [N/mm$^2$, MPa];
$\sigma_{e.l.}$ is the stress at the elastic strain limit [N/mm$^2$, MPa];
N is the Norton exponent, an odd integer [3, 5, 7, 9,..., etc].

Neck formation during a standard tensile test starts at a strain of 1/N.

**Engineering stress grid lines**

The diagram containing the bundle of isochrones 40, further shows a bungle of engineering stress grid lines 41. The value of $\sigma$ where an engineering stress grid line intersects with the y-axis, corresponds to the engineering stress ($\sigma_e$) of any true strain and stress couple ($\varepsilon_{true}$,$\sigma_{true}$) on that engineering stress grid line.

For example, the engineering stress ($\sigma_e$) corresponding to the true stain and stress couple ($\varepsilon_{true}$,$\sigma_{true}$) of ($10^{-0.15}$, $10^{1.9}$), 42 in FIG. 4, is $10^{1.6}$ (See 43 in FIG. 4)

It is further noted that the points where the engineering stress grid lines touch the isochrones correspond to the yield points in a standard tensile test. The yield points are indicated with line 44 in FIG. 4.

The diagram further shows the 50% and the 85% proportionality limits. The proportionality limit is calculated according to equation 7:

$$p.l. = \frac{\varepsilon_{true,linear}}{\varepsilon_{true,total}} \qquad \text{Equation 7}$$

Wherein: p.l. is the proportionality limit, i.e. 50% (0.50) and 85% (0.85) in the present case [-]; $\varepsilon_{true,linear}$ is the maximum strain in the linear region of the stress-strain curve (i.e. maximum elastic strain) [-]; $\varepsilon_{true,total}$ is the total strain at the proportionality limit [-].

The 50% and 85% proportionality limits are indicated in FIG. 4 with reference numbers 45 and 46, respectively.

The 85% proportionality limit is used to determine the safe strain (and stress), which may be applied to a material. Below the 85% proportionality limit the permanent deformation of the material, if any, would be very small. At strains within the 85% proportionality limit no material fatigue occurs. The 85% proportionality limit as safe stress and strain limit has been defined by the British Plastic and Rubber institute and is used as safety limit in the present invention and enabling economic dimensioning of constructions.

As can be seen in the diagram, the engineering stress equals the true stress at the 85% proportionality limit for the present example (all safe stresses are located in the plateau regions of the engineering stress grid lines).

The isochrones and the 85% proportionality limit are used in the method according to the present invention in the following way:

- once the reference time has been determined as described before (log($t_R$)) the corresponding Isochrone Is looked up in the isochrone diagram;
- the 85% proportionality point is looked up, the coordinates of which correspond to the safe strain and stress of the material in questlon : ($\varepsilon_{true}$ **85%,** $\sigma_{true}$, 86%) = ($\varepsilon_{safe}$,$\sigma_{safe}$);
- The safe stress and strain can then further be used in construction calculations.

Non modulus mechanics

For vlsco-elastlc materials, the elastic modulus depends on temperature and deformation time. In some cases the variation of the elastic modulus across the work range of the strain-stress curve may be a factor 8, which complicates construction calculations to a large extent. In construction mechanics, it would therefore be helpful to eliminate the elastic modulus from stress-strain equations used when designing a construction.

It was surprisingly found that for designing and dimensioning constructions, only five stress-strain relations are required, four of which are buckling equations of a straight bar having several cross-sections, a thin walled tube, a plate with all edges supported and a plate of which one long edge Is clamped and the other long edge Is freely suspended. The fifth stress-strain relation Is a bending relation of a beam, wherein the bending strain equals a factor times the relative bending of the bar/beam times the relative height of the bar/beam. The factor is 6 for a bar/beam with one end fixed and one end free. The factor is 12 for both end fixed.

For a straight bar under end loading and both ends hinged, the buckling equation according to Euler Is as follows:

$$\sigma_{buckling} = \frac{\pi^2 \cdot E}{\lambda^2} \qquad \text{Equation 8}$$

Wherein:

$\sigma_{buckling}$ is the critical buckling tension (beyond which the bar buckles) [N/mm$^2$; MPa];
$\pi$ is 3.14159;
$\lambda$ is the slenderness ratio of the bar [-];

When the buckling tension Is divided by the elastic modulus (E), the critical buckling strain is obtained and the buckling equation does not contain the elastic modulus anymore.

$$\varepsilon_{buckling} = \frac{\sigma_{buckling}}{E} = \left(\frac{\pi}{\lambda}\right)^2 \qquad \text{Equation 9}$$

Wherein:

$\varepsilon_{buckling}$ is the critical buckling strain, beyond which the bar buckles [%];

The slenderness ratio is defined as:

$$\lambda = \frac{L}{i} \qquad \text{Equation 10}$$

Wherein:

L is the length of the bar [mm];

i Is the inertla radius [mm] which Is defined as:

$$i = \sqrt{\frac{I}{A}}$$

Equation 11

Wherein:

I is the area moment of inertia [mm$^4$];

A is the cross sectional area of the bar [mm$^2$].

Table 1 shows the moment of inertla I, the cross sectional area A and the radius of inertia I for several cross sectional shapes.

*Table 1 Moment of Inertia 1, cross sectional area A and radius of inertia I for several cross sectional shapes of a bar.*

| Shape of cross section . | I [mm$^4$] | A [mm$^2$] | I [mm] |
|---|---|---|---|
| Circular | $\pi{*}r^4/4$ | $\pi{*}r^2$ | $\sqrt{(r^2/4)} = r/2$ |
| Rectangular | $b^{*}h^3/12$ | $b{*}h$ | $\sqrt{(h^2/12)} = 16\sqrt{3}{*}h$ |
| Cylindrical | $\pi{*}(r0^4 - rl^4)/4$ | $\pi(r_o^2 - r_l^2)$ | $\sqrt{[(r_g^4 - r_l^4)/(4(r_o^4 - (r_l^4))]}$ |

Wherein:

- r Is the radius of the bar (solid bar) [mm];
- b is the width and h is the height (i.e. the dimension perpendicular to the deformation direction) of a rectangular bar [mm];
- $r_o$ and r, are the outer and inner radius of a cylindrical bar, respectively [mm].

The earlier described four buckling equations and the bending strain equation according to the non-modulus-mechanics are shown in table 2.

Depending on the construction one or more of the equations shown in table 1 may be used to design a construction. In the design calculation the critical buckling or bending strain Is chosen equal to the safe strain of the material In question, which was determined from the diagram containing the bundle of Isochrones, as described above.

*Table 2 buckling en* bending *strain* equations *for Several geometries.*

| | Strain equation | Slenderness ratlo | |
|---|---|---|---|
| A | $\varepsilon_{buckling} = \left(\dfrac{\pi}{\lambda}\right)^2$ | L/i | Straight bar under end loading, both ends hinged (see equations 9-11 and table 1) |
| B | $\varepsilon_{buckling} = \dfrac{3}{\pi^2} \cdot \dfrac{1}{\lambda}$ | r/t | thin walled tube under uniform compression, wherein r is the radius of the tube and t is the wall thickness of the tube. |
| C | $\varepsilon_{buckling} = \dfrac{\pi^2}{3 \cdot (1 - \upsilon^2)} \cdot \left(\dfrac{1}{\lambda}\right)^2$ | b/t | Plate, all edges simply supported, wherein b is the width of the plate field, t is the thickness of the plate and v Is the Polsson ratio. Preferably the plate thickness is between 1 and 4mm. |

(continued)

|   | Strain equation | Slenderness ratlo |   |
|---|---|---|---|
| D | $\varepsilon_{buckling} = \dfrac{1}{(1-v^2)} \cdot \left(\dfrac{1}{\lambda}\right)^2$ | b/t | Plate, one long edge clamped other long edge free, wherein b Is the width of the plate field, t Is the thickness of the plate and v is the Poisson ratio. Preferably the plate thickness Is between 1 and 4 mm. |
| E | $\varepsilon_{bending} = c \cdot \dfrac{h}{L} \cdot \dfrac{f}{L}$ | - | Bending strain, wherein h is the beam height (i.e. perpendicular to the bending direction), L Is the length of the beam and c Is 6 if both ends are free, c is 121f both ends are fixed; f is the absolute bending displacement |

EXAMPLES

Test samples are prepared by using a DSM Resolve mini extruder. The test samples have a cylindrical shape with a diameter of 3 mm and a test length of 30 mm (i.e. the free length between both clamps in the stepper-torsion-bench.

Example 1 : designing a beer crate

Requirements:

At a temperature of 35°C a beer crate containing 6 x 4 bottles of beer should be able to withstand a force of 625 kgf (6.13 kN) for 3 months. This force equals the force on a first (i.e. bottom) beer crate in a storage pile-up.

The outer dimensions of the crate are $l_1 x l_2 x h_{orate}$, = 30 cm x 40 cm x 26 cm.

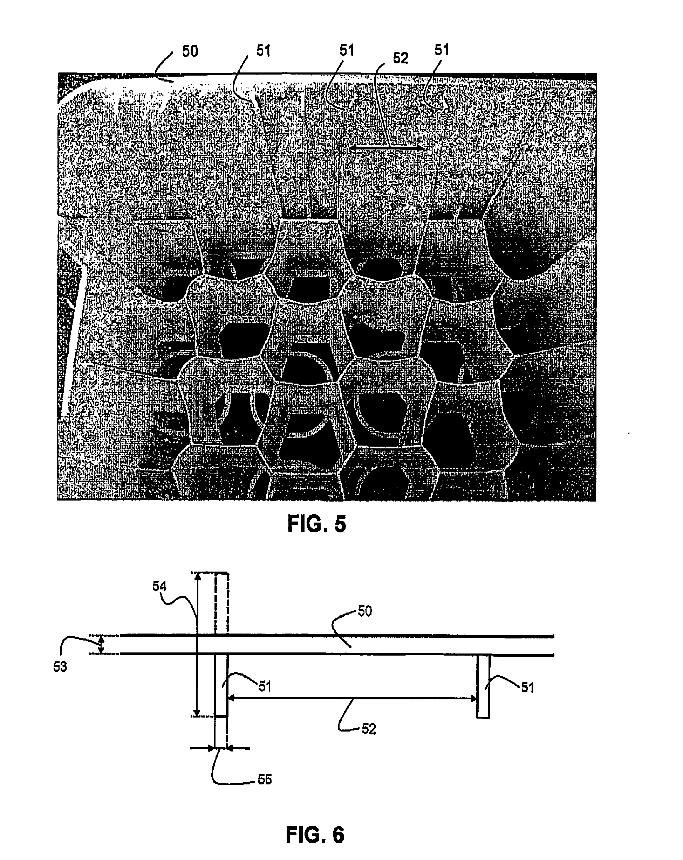

Figure 5 shows a photograph a crate according to this example and Figure 6 shows the construction elements on which the calculations In this example are based.
From the diagram with reference lines (FIG. 3) it can be deduced that the $\log(t_R)$ corresponding to a log(load-time) of log(3 months * 30 days * 24 hours * 60 min * 60 seconds) = $(og(7.8*10^6)$ = 6.9 at 35°C, Is 10.
The safe stress and strain (i.e. 85% proportionality limit) follow from the isochrone diagram (isochrones number 49 in FIG. 4). $\log(\sigma_{safe})$ = 0.17 and $\log(\varepsilon_{safe})$ = -2. The safe stress and strain are respectively 1.49 N/mm$^2$ and 1%.
These safe stress and strain values are used for all mechanical calculations in designing the beer crate.
The minimum thickness ($t_{min}$, see 53 In FIG 6), of the plate (see 50 in FiGs 5 and 6) is calculated using Equation 12

$$\sigma = \frac{F}{A} = \frac{F}{C*t} \approx \frac{F}{2*(l_1 + l_2)*t_{min}} \qquad \text{Equation 12}$$

Wherein:

$l_1$ = 30 cm: $l_2$ = 40 cm; F = 625 kgf (6.13 kN); $\sigma = \sigma_{save}$ = 1.49 N/mm$^2$

The minimal thickness of the walls 50 of the beer crate therefore Is:

$$t_{min} = \frac{F}{2*(l_1+l_2)*\sigma_{safe}} = \frac{6.13*10^3}{2*(300+400)*1.49} = 3mm$$

The maximum plate field width 52 can be calculated with equation C from Table 2.

At a Poison ratio of 0.5, and a critical buckling strain of 1%, the slenderness ratio Is equal to:

$$\lambda = \frac{1}{\sqrt{0.01/4.38}} = 20.9$$

The minimum thickness (was calculated at 3 mm. Therefore, the maximum plate field width 52 is 20 * 3 mm = 60 mm.

So reinforcement ribs 51 need to be placed at least at every 60 mm of the circumference of the beer crate.

The dimensions of the reinforcement ribs 51 having a length equal to the height of the crate, which is 26 cm (see above), are calculated using equations 9 -11. The moment of inertia for a bar having a rectangular cross section Is shown in Table 1.

From equation 9, the slenderness ratio of a rib 51 using the safe strain ($\varepsilon_{safe}$ =1%) can be calculated and is:

$$\lambda = \frac{\pi}{\sqrt{\varepsilon_{safe}}} = \frac{3.14159}{\sqrt{0.01}} = 31.4$$

So the Inertia radius i is calculated with equation 10 as follows:

$$i = \frac{L}{\lambda} = \frac{260mm}{31.4} = 8.28$$

For buckling of the reinforcement rib 51 having a buckling axis lying In the outer plate of the crate (i.e. wall 50), the height used for calculating the radius of Inertia of a bar having a rectangular cross section (see Table 1) equals twice the height of the reinforcement rib, see 54 in FIG 6 (i.e. 54 = 2 * $h_{rib}$). The height of the rib, $h_{rib}$, Is therefore calculated as follows:

$$i = \frac{\sqrt{3}}{6}*(2*h_{rib}) \rightarrow h_{rib} = \frac{3}{\sqrt{3}}*i = 1.73*8.28 = 14.3mm$$

The thickness 55 of the ribs 51 is calculated using equation D from Table 2:

$$\varepsilon_{buckling} = \frac{1}{(1-\upsilon^2)} \cdot \left(\frac{1}{\lambda}\right)^2$$

With a safe strain of 1%, a Poisson ration of 0.5, the slenderness ratio is equal to:

$$\lambda = \frac{1}{\sqrt{\varepsilon_{safe} * (1 - \upsilon^2)}} = \frac{1}{\sqrt{0.01 * (1 - 0.5^2)}} = 11.5$$

with

$$\lambda = \frac{h_{rib}}{t_{rib}} \rightarrow t_{rib} = \frac{14.3}{11.5} = 1.24mm$$

The minimum thickness 55 of the reinforcement ribs 51 therefore is 1.24 mm.

Example 2: Designing a car bumper

Requirements:

At a temperature of -20˚C it should be possible to hit objects at a low speed (s5 km/hr) to a maximum bending deformation of 40 mm with an unsupported beam length (i.e. the length between two fixing points of the car bumper) of between 60 and 80 mm.

Using the bending equation from table 2, with c = 12, h =10 cm, L= 70 cm and f = 40 mm =4cm, $\varepsilon$bending = 12 * 10/70 * 4/70 = 0.098
At a speed of 5 km/hr (1.4 * $10^3$ mm/s) with a maximum deformation of 40 mm, the deformation time is 40 /1.4 * $10^3$ = 0.03 8; Log(t) = -1.54.

Table 3 shows log($t_R$) as a function of T, derived from the bundle of reference lines of FIG. 3

| T[˚C] | Log($t_R$) |
|---|---|
| -5 | -2 |
| 5 | -1 |
| 17 | 0 |
| 32 | 1 |
| 48 | 2 |
| 77 | 3 |
| 88 | 4 |
| 115 | 5 |
| not in diagram | 6 |
| not in diagram | 17 |

From FIG. 4. it Is deduced that for log($t_R$) values of between 1.5 and 5, the 85% strain proportionality boundary varies between a log($\varepsilon$) of -1.9 and -2.0, which corresponds to a safe strain of between 0.01 and 0.0125, i.e. a safe strain of around 1%.
The desired design safe strain is however about 10% (see calculations above). Therefore In the temperature range of between -5 and 115˚C a car bumper made of polypropylene and having the dimensions as shown above will show brittle failure when objects are hit at relatively low speeds.

**Claims**

1. Torsion-bench comprising a motor having a first axis, a torsion tester having a second axis, a first clamp having a third axis and a second clamp having a fourth axis; the clamps being arranged for holding a test sample; wherein the first clamp is operatively connected to the motor and the second clamp Is operatively connected to the torsion tester; and wherein the motor, the first clamp, the torsion tester and the second clamp are aligned such that the first, the second, the third and the fourth axes coincide, **characterized in that** the motor is a stepper motor.

2. The torsion-bench according to claim 1, comprising a temperature controlled chamber, wherein at least the first and second clamps are arranged inside the temperature controlled chamber.

3. The torsion-bench according to any one of the previous claims, wherein the first and/or the second clamp comprises a temperature equalizer.

4. The torsion bench according to any one of the previous claims, wherein the stepper torsion bench comprises a cooling means, preferably a fan.

5. Method for material characterization using the stepper torsion bench, the method comprises the steps of:

   - providing a test sample;
   - clamping the test sample into the clamps connected to the stepper motor and to the torsion tester;
   - deforming the material by torsion;
   - measuring the couple

6. The method according to claim 5, wherein the test sample Is dynamically deformed to determine the complex visco-elastic modulus.

7. The method according to claim 6, wherein the method Is performed at a strain of between 1 and 50%.

8. The method according to claim 5, wherein the test sample is statically deformed with a monotonous increasing torsion towards a strain of at least 100%.

9. Method for mechanical construction calculations in industrial design, the method comprising the steps of:

   - determining conditions which a mechanical construction has to be able to withstand, the conditions comprising temperature M and deformation time;
   - determining a reference time of a material from a reference line diagram which is characteristic for the material;
   - determining the maximum allowable strain and stress at the reference time from the isochrones material characteristics ;
   - designing the Intended construction by using non modulus mechanics.

**FIG. 1**

**FIG. 2**

FIG. 3

FIG. 4

**FIG. 5**

**FIG. 6**

Europäisches
Patentamt

European
Patent Office

Office européen
des brevets

**EUROPEAN SEARCH REPORT**

Application Number

EP 10 01 1339

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 101 487 752 A (JINHUA ENTRY EXIT INSPECTION A [CN]) 22 July 2009 (2009-07-22) * the whole document * ----- | 1-9 | INV. G01M7/08 G01N3/307 G01N3/32 |
| A | US 4 941 363 A (DOEMENS GUENTER [DE] ET AL) 17 July 1990 (1990-07-17) * the whole document * ----- | 1-9 | |
| E | US 2010/307218 A1 (MEUTER HERBERT [DE] ET AL) 9 December 2010 (2010-12-09) * the whole document * ----- | 1-9 | |
| | | | TECHNICAL FIELDS SEARCHED (IPC) |
| | | | G01M G01N |

The present search report has been drawn up for all claims

| Place of search | Date of completion of the search | Examiner |
|---|---|---|
| Munich | 4 March 2011 | Thomte, Peter |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                                       
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 10 01 1339

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2011

| Patent document cited in search report | | Publication date | Patent family member(s) | | Publication date |
|---|---|---|---|---|---|
| CN 101487752 | A | 22-07-2009 | NONE | | |
| US 4941363 | A | 17-07-1990 | EP | 0354386 A1 | 14-02-1990 |
| | | | ES | 2028421 T3 | 01-07-1992 |
| | | | JP | 2112701 A | 25-04-1990 |
| | | | JP | 2865721 B2 | 08-03-1999 |
| US 2010307218 | A1 | 09-12-2010 | CN | 101855531 A | 06-10-2010 |
| | | | WO | 2009062481 A1 | 22-05-2009 |
| | | | DE | 112008003002 A5 | 05-08-2010 |
| | | | EP | 2212670 A1 | 04-08-2010 |
| | | | JP | 2011503556 T | 27-01-2011 |
| | | | KR | 20100102610 A | 24-09-2010 |

EPO FORM P0459

For more details about this annex : see Official Journal of the European Patent Office, No. 12/82